# EUROPÄISCHE PATENTSCHRIFT

(11) **EP 0 572 933 B1**
(45) Veröffentlichungstag und Bekanntmachung des Hinweises auf die Patenterteilung: **18.10.1995**
(21) Anmeldenummer: 93108638.3
(22) Anmeldetag: 28.05.1993
(51) Int. Cl.: C04B 40/00, C04B 20/00, C04B 14/18

(54) **Mörtel**
Mortar
Mortier

(30) Priorität: 02.06.1992 DE 4218143
(43) Veröffentlichungstag der Anmeldung: 08.12.1993
(73) Patentinhaber: Deutsche Perlite GmbH, 44147 Dortmund (DE)
(72) Erfinder: Knauf, Albrecht, Dr. Ing., W-5758 Fröndenberg-Ardey (DE)
(74) Vertreter: Becker, Thomas, Dr., Dipl.-Ing.

(56) Entgegenhaltungen:
- EP-A- 0 303 071
- EP-A- 0 475 302
- FR-A- 2 320 975

## Beschreibung

Die Erfindung betrifft die Verwendung eines Mörtels zur Erstellung von Stein-Mauerwerken mit einer Fugenstärke zwischen 3 und 12 mm. Ein entsprechender Mörtel wird nachstehend Schmalfugenmörtel genannt.

Verschiedene Mörtel zum Vermauern von Mauersteinen gehören zum Stand der Technik.

Ein konventioneller Mauermörtel besteht aus einem Bindemittel sowie Sand als Zuschlag.

Auch sogenannte Leicht-Mauermörtel sind bekannt, die anstelle des Sandes Leichtzuschläge wie Perlit enthalten.

Mit derartigen Mörteln werden Steine vermauert, wie sie im Werk anfallen, das heißt Steine mit zum Teil erheblichen Maßtoleranzen. Entsprechend werden die vorgenannten Mauermörtel in größeren Dicken ausgebracht, um Maßtoleranzen auszugleichen. In Deutschland ist die Dicke der Mörtelfuge für Normal-Mauermörtel mit 12 mm genormt.

Daneben sind auch sogenannte Dünnbettmörtel bekannt, und zwar wiederum solche mit Sand als Zuschlag und solche mit Leichtzuschlägen wie Perlit.

Der Dünnbettmörtel wird nach Art eines Klebers in Fugenstärken zwischen 1 und 3 mm aufgetragen. Voraussetzung für die Verwendung derartiger Dünnbettmörtel ist die Verarbeitung von plangeschliffenen Steinen, da der Kleber - im Gegensatz zum Normal-Mauermörtel - keine Maßtoleranzen der Steine ausgleichen kann, auch aufgrund seiner gegenüber einem Normal-Mauermörtel unterschiedlichen Ausbringung, meist mit einem Zahnspachtel oder einem sogenannten Mörtelschlitten.

Dies vorausgeschickt liegt der Erfindung die Aufgabe zugrunde, einen Mörtel anzubieten, der einerseits die günstigen Eigenschaften eines Dünnbettmörtels (Klebers) aufweist, andererseits aber auch die Verlegung von ungeschliffenen Steinen (mit entsprechenden Maßtoleranzen) ermöglicht.

Dabei geht die Erfindung von folgender überlegung aus:
Die Verwendung und Verarbeitung eines Mörtels nach Art eines Dünnbettmörtels hat den Vorteil, daß ein solcher Mörtel eine hohe Eigenstandsfestigkeit aufweist. Andererseits lassen sich Maßtoleranzen der Steine beim Setzen durch "Klopfen" auf die Steine nicht egalisieren. Die Ursache hierfür liegt darin, daß sich bei Verwendung eines Dünnbettmörtels mit Sand als Zuschlag dieser aufgrund seiner hohen Festigkeit nicht zertrümmern läßt. Auch die Verwendung von Sand in entsprechend feiner Fraktion führt zu keinem befriedigenden Ergebnis, weil ein gewisses Siebspektrum des Zuschlags notwendig ist, um eine ausreichende Festigkeit des Mörtels zu erhalten. Schließlich würde der Mörtel bei einem "Klopfen" auf die Steine auch seitlich herausquellen, was bei einem Dünnfugenmörtel aufgrund der geringen Fugenstärke diese soweit herabsetzen würde, daß kein ausreichender Halt der Steine mehr gegeben wäre.

Auch Dünnbettmörtel mit Leichtzuschlägen führen in diesem Sinne zu keinen befriedigenden Ergebnissen, da die Leichtzuschläge ausschließlich in Kornfraktionen kleiner 1 mm eingesetzt werden und das Herausquellen des Mörtels beim "Klopfen" auf die Steine aus den genannten Gründen unerwünscht ist.

Wird jedoch - in Übereinstimmung mit dem erfindungsgemäßen Vorschlag - ein Mörtel verwendet, der zur Ausbildung einer Fugenstärke zwischen 3 und 12 mm vorgesehen ist, und enthält dieser Mörtel als Zuschlag einen Leicht-Zuschlag, der unter mechanischer Krafteinwirkung zerstörbar ist, so führt dies im Ergebnis dazu, daß einerseits Maßtoleranzen durch "Klopfen" auf die Steine ausgeglichen werden können (wie bei einem normalen Mauermörtel), andererseits aber kein Herausquellen des Mörtels stattfindet (analog wie beim Dünnbettmörtel), weil bei der Zerstörung des Leichtzuschlags der entsprechend freiwerdende "Raum" innerhalb des Mörtels von den übrigen Mörtelbestandteilen, insbesondere dem Bindemittel, eingenommen werden kann.

Voraussetzung dafür ist, daß der Zuschlag einen Kornanteil aufweist, der größer ist als die Dicke der auszubildenden Mörtelfuge. Diese muß nämlich nach dem Aufbringen des Schmalfugenmörtels auf das gewünschte Maß gebracht werden, was - in Übereinstimmung mit einem normalen Mauermörtel - durch entsprechendes "Klopfen" (sogenanntes Stubben) auf die Steine erfolgt.

In ihrer allgemeinsten Ausführungsform betrifft die Erfindung insoweit die Verwendung eines Mörtels gemäß Anspruch 1.

Das Bindemittel kann aus üblichen anorganischen Bindemitteln wie Portlandzement bestehen. Der Portlandzement kann aber auch durch andere Zemente oder hydraulische Aschen ganz oder teilweise ersetzt werden.

Das die Klebewirkung der Mörtelbestandteile fördernde Zusatzmittel ist wichtig, um eine Ausbringung des Mörtels nach Art eines Dünnbettmörtels zu ermöglichen, ohne daß der Mörtel "wegläuft". In diesem Sinne werden beispielsweise Methylzellulose und Kalkhydrat vorgeschlagen.

Als körniger Zuschlag eignen sich in besonderem Maße glasigporöse körnige Werkstoffe wie geblähter Perlit, Vermiculit und/oder Bims und Schaumglas, gebrochenes sogenanntes Foamglas sowie Blähton und Blähschiefer.

Derartige Leichtzuschläge weisen eine hohe offene und geschlossene Porosität auf, besitzen aber nur eine beschränkte Eigenfestigkeit, so daß sie schon bei relativ geringen mechanischen Belastungen zerstört werden. Diesen Effekt macht sich die Erfindung zunutze, um einerseits während der Zerstörung des Leichtzuschlages die Stärke der Mörtelfuge verringern zu können, andererseits aber gleichzeitig ein seitliches Herausquellen des Mörtels zwischen den Steinen zu verhindern, weil die übrigen Mörtelbestandteile, insbesondere das Bindemittel, unmittelbar das bei der Zertrümmerung entstehende Volumen des Leichtzuschlags einnehmen. Damit ergibt sich insgesamt ein Mörtel mit hoher Eigenstandsfestigkeit analog dem bekannten Dünnbettmörtel.

Um die vorstehend genannten Effekte auch bei der Verarbeitung von Steinen mit größeren Maßtoleranzen voll ausschöpfen zu können, sieht eine Ausführungsform der Erfindung vor, daß mindestens 50 Gew.-% des Zuschlaganteils an der Gesamt-Trocken-Mörtelmasse einen mittleren Teilchendurchmesser aufweisen, der größer ist als die Dicke der auszubildenden Mörtelfuge.

"Größer" heißt dabei, daß beispielsweise zur Ausbildung einer Mörtelfuge mit 6 mm der entsprechende Anteil des Zuschlages in einer Kornfraktion größer 6 mm vorliegen muß. Da die Mörtelfuge nicht immer absolut exakt eingestellt werden kann, sollte die entsprechende Kornfraktion des Zuschlages eine mittlere Teilchengröße von mindestens dem 1,5-fachen der zu erstellenden Mörtelfuge aufweisen.

Die Kornfraktion des Zuschlages mit einer mittleren Teilchengröße über der der auszubildenden Mörtelfuge kann ohne weiteres auch 70 % des Gesamt-Zuschlages ausmachen, Daneben sollen aber auch kleinere Kornfraktionen - als Füllstoffe - Verwendung finden. Die entsprechende Sieblinie orientiert sich dabei vorzugsweise an der sogenannten "Fuller-Parabel".

Je gröber der Zuschlag, umso größere Löcher im Mauerziegel können überbrückt werden.

Dem Mörtel können auch weitere Zusätze, wie Fasern, beispielsweise Papier-, Zellulose-, Glas- oder Steinfasern zugemischt werden. Weiterhin ist der Zusatz von Kork, Schaumkunststoff und dergleichen möglich. Ebenso ist die Verwendung weiterer Zusätze, wie die Verwendung von Luftporenbildnern, beispielsweise Tensiden, möglich, ohne den Kerngedanken der Erfindung zu verlassen.

Weitere Merkmale der Erfindung ergeben sich aus den Merkmalen der Unteransprüche.

Die Erfindung wird nachstehend anhand zweier Ausführungsbeispiele näher erläutert. In beiden Fällen dienen die beschriebenen Schmalfugenmörtel zur Ausbildung von Fugen mit einer Stärke von 4 mm.

### Schmalfugenmörtel nach Beispiel 1:

1.1 Geblähter Perlit: 100 kg/m³ in einer Kornfraktion bis 6 mm, davon anteilig 50 Gew.-% in der Kornfraktion 4 bis 6 mm
1.2 Zement (Portlandzement 45 F) : 500 kg/m³
1.3 Methylzellulose: 1,3 kg/m³
1.4 Luftporenbilder (Tensid): 0,4 kg/m³
1.5 Wasser: 295 kg/m³

### Schmalfugenmörtel nach Beispiel 2:

2.2 Vermiculit: 100 kg/m³ in einer Kornfraktion bis 6 mm, davon 30 Gew.-% anteilig in einer Kornfraktion 4 bis 6 mm
2.2 Zement (Portlandzement 45 F): 630 kg/m³
2.3 Kalksteinmehl: 200 kg/m³
2.4 Mehtylzellulose: 1,0 kg/m³
2.5 Zellulosefasern: 0,5 kg/m³
2.6 Wasser: 375 kg/m³

Beide Schmalfugenmörtel können mit einem Mörtelschlitten oder einer Mörtelpistole - wie ein Dünnbettmörtel - ausgebracht werden. Durch leichtes Klopfen auf die Steine der nächsten Steinreihe werden die das Fugenmaß übersteigenden Anteile des Leichtzuschlages zertrümmert, ohne daß der Mörtel seitlich zwischen den Steinen herausquillt.
Der Schmalfugenmörtel weist eine hohe Eigenstandsfestigkeit auf und erhärtet ähnlich wie der bekannte Dünnbettmörtel. Aufgrund der Kornzertrümmerung des "Überkorns" des Leichtzuschlages lassen sich übliche Maßtoleranzen der Steine ausgleichen.

## Patentansprüche

1. Verwendung eines Mörtels, bestehend aus mindestens:
1.1 einem anorganischen, zumindest latenthydraulischen Bindemittel,
1.2 einem, unter mechanischer Krafteinwirkung zerstörbaren körnigen Zuschlag,
1.3 einem, die Klebewirkung der Mörtelbestandteile fördernden Zusatzmittel,
zur Erstellung von Steinmauerwerken mit einer Fugenstärke zwischen 3 und 12 mm, wobei der Zuschlag einen Kornanteil aufweist, dessen mittlerer Durchmesser größer ist als die Dicke der auszubildenden Mörtelfuge.

2. Verwendung nach Anspruch 1, bei der das Bindemittel aus Portlandzement besteht.

3. Verwendung nach Anspruch 1 oder 2, bei der das Zusatzmittel aus Methylzellulose besteht.

4. Verwendung nach Anspruch 1 oder 2, bei der das Zusatzmittel aus Kalkhydrat besteht.

5. Verwendung nach einem der Ansprüche 1 bis 4, bei der der Zuschlag ein glasig-poröses körniges Material ist.

6. Verwendung nach einem der Ansprüche 1 bis 5, bei der der Zuschlag aus geblähtem Perlit, Vermiculit und/oder Bims besteht.

7. Verwendung nach einem der Ansprüche 1 bis 6, bei der mindestens 50 Gew.-% des Zuschlaganteils an der Gesamt-Trocken-Mörtelmasse einen mittleren Teilchendurchmesser aufweisen, der größer ist als die Dicke der auszubildenden Mörtelfuge.

8. Verwendung nach Anspruch 7, bei der mindestens 70 Gew.-% des Zuschlaganteils an der Gesamt-Trocken-Mörtelmasse einen mittleren Teilchendurchmesser aufweisen, der größer ist als die Dicke der auszubildenden Mörtelfuge.

9. Verwendung nach einem der Ansprüche 1 bis 8, bei der der Mörtel einen Faseranteil als zusätzlichen Zuschlag aufweist.

10. Verwendung nach Anspruch 9, bei der die Fasern Papier-, Zellulose-, Glas- und/oder Steinfasern sind.

11. Verwendung nach einem der Ansprüche 1 bis 10, bei der das Bindemittel, bezogen auf die Gesamt-Trocken-Märtelmasse, in einem Masseanteil von 50 bis 90 % vorliegt.

12. Verwendung nach einem der Ansprüche 1 bis 11, bei der der Masseanteil des Zuschlages an der Gesamt-Trocken-Mörtelmasse zwischen 10 und 50 % beträgt.

13. Verwendung nach einem der Ansprüche 1 bis 12, bei der der Masseanteil des oder der Zusatzmittel an der Gesamt-Trocken-Mörtelmasse bis 40 % beträgt.

14. Verwendung nach einem der Ansprüche 9 bis 13, bei der die Fasern eine Länge zwischen 2 mm und 30 mm und einen Durchmesser zwischen 10 µm und 500 µm aufweisen.

## Claims

1. The use of a mortar, consisting of at least:
1.1 an inorganic, at least latent hydraulic binder,
1.2 a granular aggregate destructable under the action of a mechanic force,
1.3 an additive promoting the adhesive effect of the components of the mortar,
for the erection of stone wallings having a joint size between 3 an 12 mm, the aggregate having a portion of grains, the mean diameter of which is greater than the size of the mortar joint to be formed.

2. The use according to claim 1, wherein the binder is Portland cement.

3. The use according to claim 1 or 2, wherein the additive is methylcellulose.

4. The use according to claim 1 or 2, wherein the additive is lime hydrate.

5. The use according to any of the claims 1 to 4, wherein the aggregate is a glassy-porous, granular material.

6. The use according to any of the claims 1 to 5, wherein the aggregate is swelled perlite, vermiculite, and/or pumice.

7. The use according to any of the claims 1 to 6, wherein at least 50% by weight of the aggregate portion of the total dry mortar mass has a mean particle size which is greater than the size of the mortar joint to be formed.

8. The use according to claim 7, wherein at least 70% by weight of the aggregate portion of the total dry mortar mass has a mean particle size which is greater than the size of the mortar joint to be formed.

9. The use according to any of the claims 1 to 8, wherein the mortar has a portion of fibers as an additional aggregate.

10. The use according to claim 9, wherein the fibers are fibers of paper, fibers of cellulose, fiber glass and/or rock wool.

11. The use according to any of the claims 1 to 10, wherein the portion of the binder is between 50 and 90% by weight on the basis of the total dry mortar mass.

12. The use according to any of the claims 1 to 11, wherein the portion of the aggregate is between 10 and 50% by weight on the basis of the total dry mortar mass.

13. The use according to any of the claims 1 to 12, wherein the portion of the additive or the additives is up to 40% by weight on the basis of the total dry mortar mass.

14. The use according to any of the claims 9 to 13, wherein the fibers have a length between 2 mm and 30 mm and a diameter between 20 µm and 500 µm.

## Revendications

1. Utilisation d'un mortier, composé d'au moins :
1.1 un liant inorganique, présentant au moins une latence hydraulique,
1.2 un agrégat granuleux, susceptible d'être détruit sous l'action d'une force mécanique,
1.3 un additif, favorisant l'effet collant des composants du mortier,
pour construire des ouvrages maçonnés comprenant des pierres, avec une ouverture de joint comprise entre 3 et 12 mm, l'agrégat comportant une fraction granuleuse dont le diamètre moyen est supérieur à l'épaisseur du joint de mortier à réaliser.

2. Utilisation selon la revendication 1, dans laquelle le liant est constitué de ciment Portland.

3. Utilisation selon la revendication 1 ou 2, dans laquelle l'additif est constitué de cellulose de méthyle.

4. Utilisation selon la revendication 1 ou 2, dans laquelle l'additif est constitué d'hydrate de chaux.

5. Utilisation selon l'une des revendications 1 à 4, dans laquelle l'agrégat est un matériau granuleux vitreuxporeux.

6. Utilisation selon l'une des revendications 1 à 5, dans laquelle l'agrégat est constitué de perlite, vermiculite et/ou pierre ponce expansée.

7. Utilisation selon l'une des revendications 1 à 6, dans laquelle au moins 50 % en poids de l'agrégat présente, pour la masse totale de mortier sec, un diamètre de particule moyen supérieur à l'épaisseur du joint de mortier à réaliser.

8. Utilisation selon la revendication 7, dans laquelle au moins 70 % en poids de l'agrégat présente, pour la masse totale de mortier sec, un diamètre de particule moyen supérieur à l'épaisseur du joint de mortier à réaliser.

9. Utilisation selon l'une des revendications 1 à 8, dans laquelle le mortier présente une proportion de fibres à titre d'agrégat supplémentaire.

10. Utilisation selon la revendication 9, dans laquelle les fibres sont des fibres de cellulose de papier, de verre et/ou des fibres minérales.

11. Utilisation selon l'une des revendications 1 à 10, dans laquelle le liant est présent en une proportion massique de 50 à 90 %, par rapport à la masse totale de mortier sec.

12. Utilisation selon l'une des revendications 1 à 11, dans laquelle la proportion massique de l'agrégat est de 10 à 50 %, par rapport à la masse totale de mortier sec.

13. Utilisation selon l'une des revendications 1 à 12, dans laquelle la proportion massique du ou des additifs va jusqu'à 40 %, par rapport à la masse totale de mortier sec.

14. Utilisation selon l'une des revendications 1 à 13, dans laquelle les fibres ont une longueur comprise entre 2 mm et 30 mm et un diamètre compris entre 10 µm et 500 µm.
